# EUROPEAN PATENT APPLICATION

(11) **EP 3 299 651 A2**
(43) Date of publication of application: **28.03.2018**
(21) Application number: 17192454.1
(22) Date of filing: 21.09.2017
(51) Int. Cl.: F16D 1/027

(54) **BI-METAL JOINTS IN SHAFTS AND COUPLINGS**

(30) Priority: 22.09.2016 US 201615272751
(71) Applicant: Goodrich Corporation, Charlotte, NC 28217-4578 (US)
(72) Inventor: IYER, Raghu, New York, 13413-3716 (US)
(74) Representative: Hughes, Andrea Michelle

(57) **Abstract**

A mechanical shaft includes a shaft body (102) defining a longitudinal axis. A spline (104) is included at a first end of the shaft body. A flexible coupling (106) is included at a second end of the shaft body opposite the spline across the longitudinal axis. The spline and flexible coupling are of dissimilar metals. A bi-metallic joint (108) joins the dissimilar metals together.

## Description

### BACKGROUND OF THE INVENTION

### 1. Field of the Invention

The present disclosure relates to mechanical components, and more particularly to couplings, power transmission shafts, and the like.

### 2. Description of Related Art

In aerospace applications, it is advantageous to create shafts and couplings out of lightweight materials. However, lightweight materials are not suitable for some interfaces, where heavier, stronger materials are needed. To keep weight down dissimilar metals are used with a bolted connection between the two metals, so that the lightweight portion of the component can be made of the lightweight metal, and the heavier, stronger metal can be used for only the portion of the component that needs the strength. While this allows for reduction of overall weight, bolted connections add their own complexity and weight to a component. Use of various welding, bracing, interference fitting, or similar processes are feasible for lightly loaded components, but are not always suitable choices for dynamic components such as those used in airframes, power trains, and the like.

The conventional techniques have been considered satisfactory for their intended purpose. However, there is an ever present need for improved couplings, power transmission shafts, and the like. This disclosure provides a solution for this problem.

### SUMMARY OF THE INVENTION

A mechanical shaft includes a shaft body defining a longitudinal axis. A spline is included at a first end of the shaft body. A flexible coupling is included at a second end of the shaft body opposite the spline across the longitudinal axis. The spline and flexible coupling are of dissimilar metals. A bi-metallic joint joins the dissimilar metals together.

The shaft body and the flexible coupling can be on a common side of the bi-metallic joint axially. The flexible coupling includes at least one flexible diaphragm. The flexible coupling can include multiple flexible diaphragms, e.g., wherein the flexible coupling is all titanium. The shaft body can be of a lighter material than that of the spline, and the spline can be of a material with greater material strength than that of the shaft body. The shaft body and flexible coupling can include titanium, aluminum, or any other suitable material. The spline can include steel or any other suitable material.

The bi-metallic joint can include an explosion welded joint of the dissimilar metals. A weld joint of like metals can be included between the bi-metallic joint and the shaft body. The weld joint of like metals between the bi-metallic joint and the shaft body can include an electron beam (EB) weld joint. It is also contemplated that a weld joint of like metals can be included between the bi-metallic joint and the spline. The weld joint of like metals between the bimetallic joint and the spline can include an electron beam (EB) weld joint. It is also contemplated that the spline can be continuous with the bimetallic joint and can be devoid of a weld joint of like metals between the bi-metallic joint and the spline. In another aspect, it is contemplated that the shaft body can be continuous with the bimetallic joint and can be devoid of a weld joint of like metals between the bi-metallic joint and the shaft body.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

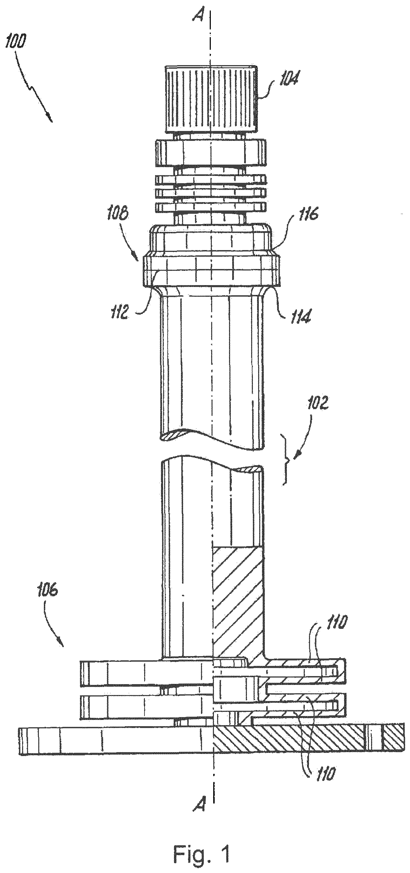

Fig. 1 is a partial cross-sectional side elevation view of an exemplary embodiment of a mechanical shaft constructed in accordance with the present disclosure, showing the bimetallic joint joining two dissimilar metals.

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a partial view of an exemplary embodiment of a mechanical shaft in accordance with the disclosure is shown in Fig. 1 and is designated generally by reference character 100. The systems and methods described herein can be used to provide mechanical shafts and couplings with reduced weight and/or greater strength than in conventional mechanical shafts.

The mechanical shaft 100, e.g., a power transmission shaft for connecting a powerplant such as a gas turbine engine to a transmission in a helicopter, includes a shaft body 102 defining a longitudinal axis A. A spline 104 is included at a first end of the shaft body 102. A flexible coupling 106 is included at a second end of the shaft body 102 opposite the spline 104 across the longitudinal axis A. The spline 104 and the flexible coupling 106 are of dissimilar metals. A bimetallic joint 108 joins the dissimilar metals together.

The shaft body 102 and the flexible coupling 106 are on a common side of the bi-metallic joint 108 axially. The flexible coupling 106 includes multiple flexible diaphragms 110, e.g., wherein the flexible coupling 106 is all titanium. The shaft body 102 is of a lighter material than that of the spline 104, and the spline 104 is of a material with greater material strength than that of the shaft body 102. Therefore, weight savings can be had due to the light weight of shaft body 102 and coupling 106 where high strength is not necessary, and the material of spline 104 provides high strength where it is needed. This can also eliminate fretting between dissimilar metals as in conventional bolted arrangements of dissimilar metals. The shaft body 102 and the flexible coupling 106 can include titanium, aluminum, or any other suitable material. The spline 104 can include steel or any other suitable material.

The bi-metallic joint 108 can include an explosion welded joint 112 of the dissimilar metals. A weld joint 114 of like metals can be included between the bi-metallic joint 108 and the shaft body 102. The weld joint 114 can include an electron beam (EB) weld joint. A weld joint 116 of like metals is included between the bi-metallic joint 108 and the spline 104. The weld joint 116 can also include an electron beam (EB) weld joint. So there are three welds 112, 114, and 116 total. It is also contemplated that one or the other of the welds 114 or 116 can be omitted so that only two welds are needed. For example, the spline 104 can be made continuous with the bimetallic joint 108 and can be devoid of a weld joint of like metals between the bimetallic joint 108 and the spline 104. In another example, it is contemplated that the shaft body 102 can be continuous with the bimetallic joint 108 and can be devoid of a weld joint of like metals between the bi-metallic joint 108 and the shaft body 102.

The methods and systems of the present disclosure, as described above and shown in the drawings, provide for mechanical shafts and couplings with superior properties including reduced weight and complexity, and/or greater strength than in traditional mechanical shafts and couplings. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A mechanical shaft comprising:
a shaft body (102) defining a longitudinal axis;
a spline (104) at a first end of the shaft body;
a flexible coupling (106) at a second end of the shaft body opposite the spline across the longitudinal axis, wherein the spline and flexible coupling are of dissimilar metals; and
a bi-metallic joint (108) joining the dissimilar metals together.

2. A mechanical shaft as recited in claim 1, wherein the shaft body (102) and the flexible coupling (106) are on a common side of the bi-metallic joint axially.

3. A mechanical shaft as recited in claim 1 or 2, further comprising a weld joint (114) of like metals between the bi-metallic joint and the shaft body.

4. A mechanical shaft as recited in claim 3, wherein the weld joint of like metals between the bi-metallic joint and the shaft body includes an electron beam (EB) weld joint.

5. A mechanical shaft as recited in any preceding claim, further comprising a weld joint (116) of like metals between the bi-metallic joint and the spline.

6. A mechanical shaft as recited in claim 5, wherein the weld joint of like metals between the bi-metallic joint and the spline includes an electron beam (EB) weld joint.

7. A mechanical shaft as recited in any preceding claim, wherein the shaft body includes titanium.

8. A mechanical shaft as recited in any preceding claim, wherein the shaft body and flexible coupling include titanium.

9. A mechanical shaft as recited in any preceding claim, wherein the spline includes steel.

10. A mechanical shaft as recited in any preceding claim, wherein the flexible coupling includes at least one flexible diaphragm (110).

11. A mechanical shaft as recited in any preceding claim, wherein the flexible coupling includes multiple flexible diaphragms, and wherein the flexible coupling is all titanium.

12. A mechanical shaft as recited in claim 1, wherein the bi-metallic joint includes an explosion welding joint of the dissimilar metals and further comprising:
a weld joint (114) of like metals between the bi-metallic joint and the shaft body; and
a weld joint (116) of like metals between the bi-metallic joint and the spline; or
wherein the bi-metallic joint includes an explosion welding joint of the dissimilar metals and further comprising:
a weld joint of like metals between the bi-metallic joint and the shaft body; and
wherein the spline is continuous with the bimetallic joint and is devoid of a weld joint of like metals between the bi-metallic joint and the spline; or
wherein the bi-metallic joint includes an explosion welding joint of the dissimilar metals and further comprising:
a weld joint of like metals between the bi-metallic joint and the spline; and
wherein the shaft body is continuous with the bimetallic joint and is devoid of a weld joint of like metals between the bi-metallic joint and the shaft body.

13. A mechanical shaft as recited in any preceding claim, wherein the spline, shaft body, and flexible coupling are configured to accommodate deflection at both the first end and the second end of the shaft body.

14. A mechanical shaft as recited in any preceding claim, wherein the shaft body is of a lighter material than that of the spline.

15. A mechanical shaft as recited in any preceding claim, wherein the spline is of a material with greater material strength than that of the shaft body.
